(19) **Europäisches Patentamt European Patent Office Office européen des brevets**

(11) **EP 1 665 615 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(21) Anmeldenummer: **04762721.1**

(22) Anmeldetag: **26.08.2004**

(51) Int Cl.:
*H04L 1/06* ^(2006.01)

(86) Internationale Anmeldenummer:
**PCT/DE2004/001891**

(87) Internationale Veröffentlichungsnummer:
**WO 2005/027396 (24.03.2005 Gazette 2005/12)**

(54) **VERFAHREN UND SYSTEM ZUM AUSNUTZEN EINER KOOPERATIVEN DIVERSIFIZIERUNG IN DRAHTLOSEN RELAISSCHALTUNGEN**

METHOD AND SYSTEM FOR USING COOPERATIVE DIVERSIFICATION IN WIRELESS RELAY CIRCUITS

PROCEDE ET SYSTEME POUR EXPLOITER UNE DIVERSIFICATION COOPERATIVE DANS DES RESEAUX A RELAIS SANS FIL

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.09.2003 DE 10342190**

(43) Veröffentlichungstag der Anmeldung:
**07.06.2006 Patentblatt 2006/23**

(73) Patentinhaber: **Vodafone Holding GmbH 40213 Düsseldorf (DE)**

(72) Erfinder:
• **HEROLD, Patrick 01277 Dresden (DE)**
• **ZIMMERMANN, Ernesto 01307 Dresden (DE)**

(74) Vertreter: **Müller, Thomas et al Patentanwalt Müller & Schubert Innere Wiener Strasse 13 81667 München (DE)**

(56) Entgegenhaltungen:
• **LANEMAN J N ET AL: "Distributed space-time coded protocols for exploiting cooperative diversity in wireless networks" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002, IEEE GLOBAL TELECOMMUNICATIONS CONFERENCE, NEW YORK, NY : IEEE, US, Bd. VOL. 1 OF 3, 17. November 2002 (2002-11-17), Seiten 77-81, XP010635917 ISBN: 0-7803-7632-3**
• **DOHLER M ET AL: "2-hop distributed MIMO communication system" ELECTRONICS LETTERS, IEE STEVENAGE, GB, Bd. 39, Nr. 18, 4. September 2003 (2003-09-04), Seiten 1350-1351, XP006020909 ISSN: 0013-5194 in der Anmeldung erwähnt**

EP 1 665 615 B1

**Beschreibung**

Die vorliegende Erfindung betrifft generell ein Verfahren und ein System zur Übertragung von Signalen in einem drahtlosen Relais-Netzwerk. Das Verfahren wird im Wesentlichen ausgedrückt durch ein Protokoll. Die Erfindung nutzt gleichzeitig zwei Potentiale aus, die durch drahtlose Relaissysteme beziehungsweise Relaissysteme in drahtlosen Umgebungen, etwa drahtlosen Netzwerken, bereitgestellt werden. Dabei handelt es sich um Diversitätsgewinne ("diversity gains") und Pfadverlustreduktion ("pathloss savings"). Ein Zwischenrelais zum Dekodieren und Weiterleiten (decode-and-forward-relay) unterstützt die Übertragung von einer Quelle zu einem Ziel. Das Ziel kombiniert die Signale, die es von der Quelle und dem Relais erhält. Ein grundlegendes Merkmal der Erfindung besteht darin, dass der Relais-Knoten unabhängig entscheidet, ob oder ob nicht Informationen an das Ziel weitergeleitet werden. Dadurch wird das Risiko einer fehlerhaften Übertragung minimiert, während wahre, konstruktive "diversity gains" zur Kommunikation über Fading-Kanäle bereitgestellt werden. In Kombination mit den "pathloss savings" führt dies zu signifikanten Verbesserungen, sowohl gegenüber der direkten Übertragung als auch gegenüber konventionellen Relaistätigkeiten.

Die Auslegung von drahtlosen Netzwerken sieht sich einem ansteigenden Kostendruck gegenüber: erhebliche Datenraten müssen zu angemessenen Kosten in einer fast ubiquitären Art geliefert werden. Berücksichtigt man die Einschränkungen, die durch Verbindungsbudgetschätzungen für zukünftige Generationen von infrastruktur-basierten Netzwerken auferlegt werden, so tritt Relaying als eine rentable Option hervor, um den Kompromiss zwischen Reichweite und Datenrate adressieren zu können.

Insbesondere erscheint die Verwendung mobiler Endgeräte als Relais attraktiv, da dies die Installation einer zusätzlichen Infrastruktur nicht notwendig macht. Relais, die im wesentlichen in einer Speicher-und-Weiterleitungs-Art arbeiten, erlauben es die End-zu-End-Dämpfung zwischen einer Informationsquelle und deren zugeordneten Ziel zu reduzieren. Üblicherweise ist jedes Relais in einer Relaiskette dabei ausschließlich auf die Informationen, die durch dessen unmittelbaren Vorgänger gesendet wurden, angewiesen und das Ziel hört einfach das letzte Relais in dieser Kette ab. Wir bezeichnen dies als konventionelles Relaying.

In letzter Zeit sind die Konzepte des kooperativen Relaying aufgetaucht; vergleiche "Cooperative Diversity in Wireless Networks: Efficient Protocols and Outage Behavior," (J. N. Laneman, D. N. C. Tse, und G. W. Wornell., Jan. 2002, vorgelegt bei IEEE Trans. Inform. Theory) sowie "2-Hop Distributed MIMO Communication System," (M. Dohler, A. Gkelias, und H. Aghvami, IEEE Electronics Letters, Juni 2003) und die Referenzen darin. Indem ein Zusammenwirken zwischen den Relais erlaubt wird und durch das Kombinieren aller Übertragungen von Quelle und Relais im Ziel, kann die räumliche Diversität von Relaying-Systemen genutzt werden. Wir bezeichnen dies als kooperatives Relaying. Wie wir sehen werden, kann man von den räumlichen Diversitäts-Gewinnen profitieren, indem konventionelle Relais-Protokolle geringfügig abgeändert werden und die Komplexität eines Combiners in dem Ziel aufgenommen wird. Dies macht kooperatives Relaying zu einem interessanten Kandidaten für die Verbesserung von Relais-basierten Nutzungskonzepten.

Die Informationstheoriegrundlagen des kooperativen Relayings zwischen zwei Benutzern sind in dem oben genannten Artikel "Cooperative Diversity in Wireless Networks: Efficient Protocols and Outage Behavior" adressiert. Ähnliche Ideen wurden in dem oben genannten Artikel "2-Hop Distributed MIMO Communication System," hinterfragt. In jüngerer Zeit wurde das Leistungsverhalten von verschiedenen praktischen Systemen untersucht (vgl. "On the Performance of Cooperative Diversity Protocols in Practical Wireless Systems," E. Zimmermann, P. Herhold, G. Fettweis, in Proc. 58th Vehic. Techn. Conf., Orlando, FL, Oct. 2003), woraus sich entnehmen lässt, dass das Leistungsverhalten von kooperativen Systemen wesentlich von der Verhinderung einer Fehlerfortpflanzung abhängt.

Die meisten der untersuchten Dekodier-und-Weiterleitungs-Protokolle weisen jedoch einen oder mehrere der folgenden Nachteile auf: sie benötigen Feedback, Kanal-Status-Informationen (CSI) muss an den Sendern zur Verfügung stehen, oder Fehlerfortpflanzung, die durch die Relais induziert wird, wird nicht hinreichend adressiert (oder es wird einfach angenommen, dass diese nicht auftritt).

In der Entgegenhaltung "Distributed Space-Time Coded Protocols for Exploiting Cooperative Diversity in Wireless Networks" ist ein Konzept zum kooperativen Relaying beschrieben. Dabei wird ein besonderes Protokoll bereitgestellt, das so genannte "Space-Time Coded Protocol". Eine Quelle überträgt Signale, die potentiell von vielen Relais empfangen werden können. Die Übertragung erfolgt mittels Broadcast. Zum Dekodieren benutzen die Relais dann das genannte Protokoll. Gemäß dieser bekannten Lehre existieren zwei Phasen. In der ersten Phase empfängt jedes potentielle Relais das Signal von der Quelle. Ist das SNR (Signal zu Rausch Verhältnis) ausreichend groß, um dekodiert zu werden, fungiert das entsprechende Relais als Dekodierrelais. In der zweiten Phase nutzt das Dekodierrelais das besondere Protokoll.

Aufgabe der vorliegenden Erfindung ist es somit ein Verfahren und ein System zu schaffen, die die Nachteile des Standes der Technik beheben und gleichzeitig eine optimale Übertragung erzielt werden kann.

Die Aufgabe wird gelöst durch ein Verfahren gemäß Patentanspruch 1 und ein System gemäß Patentanspruch 8. Weitere Merkmale und Ausgestaltungen ergeben sich aus den Unteransprüchen.

Gemäß einem ersten Aspekt der Erfindung wird die Aufgabe somit gelöst durch ein Verfahren zur Übertragung von Signalen in einem drahtlosen Relais-Netzwerk, wobei die Übertragung zwischen einer Quelle, einem Ziel und mindestens einem zwischengeschalteten Relais erfolgt, wobei das mindestens eine Relais als Dekodier-und-Weiterleitungs-Relais fungiert und die Übertragung in mindestens zwei Phasen erfolgt. Das Verfahren ist dadurch gekennzeichnet, dass das mindestens eine Relais unabhängig von Informationen bezüglich anderer Komponenten des Netzwerkes entscheidet, ob ein von der Quelle oder von mindestens einem anderen Relais empfangenes Signal dekodiert und weitergeleitet wird. und dass für die Entscheidung über das Dekodieren und Weiterleiten Fehlerdetektionskodes im gesendeten Signal verwendet werden.

Indem der Relais-Knoten unabhängig entscheidet, ob die Information zu dem Ziel weitergeleitet wird oder nicht, werden eine Reihe von Vorteilen erzielt. Beispielsweise wird die Gefahr einer Fehlerfortpflanzung minimiert. Gleichzeitig können aber tatsächlich konstruktive Diversitäts-Gewinne für die Kommunikation über Fading-Kanäle bereitgestellt werden. Auch für den Fall, dass Signale in dem drahtlosen Netzwerk über mehrere zwischengeschaltete Relais, d.h. mittels mehrerer Hops, an das Ziel übertragen werden sollen kann das erfindungsgemäße Verfahren vorteilhaft eingesetzt werden. Im folgenden wird aus Gründen der Einfachheit im wesentlichen Bezug auf ein zwischengeschaltetes Relais genommen.

Mit dem erfindungsgemäßen System können die oben genannten Nachteile des Standes der Technik überwunden werden und gleichzeitig die Dämpfungseinsparungen von konventionellen Relaying-Systemen und die Diversitäts-Gewinne von kooperativen Relaying-Systemen genutzt werden.

Besonders bevorzugt werden für die Entscheidung über die Dekodierung Eigenschaften des an dem Relais empfangenen Signals verwendet. Diese können sich aus dem Signal selber oder aus mit dem Signal verbundenen Informationen ergeben.

Gemäß einer Ausführungsform wird für die Entscheidung über das Dekodieren und Weiterleiten das Signal-Rausch-Verhältnis des empfangenen Signals gemessen. Diese Messung an dem Relais kann Auskunft über die Qualität des Signals geben und somit der Entscheidung über eine Weiterleitung zugrunde gelegt werden. Besonders bevorzugt erfolgt die Entscheidung bei dieser Ausführungsform anhand eines Vergleichs mit einem Schwellwert. Beim Empfang eines Signals an dem Relais, dessen Signal-Rausch-Verhältnis unterhalb des Dekodierschwellwertes liegt, wird hierbei das Signal nicht dekodiert und auch nicht an das Ziel weiterleitet. Auf diese Weise kann die Fehlerfortpflanzung bereits zu einem frühen Stadium auf einfache Weise verhindert werden. Das Signal-Rausch-Verhältnis ist als Entscheidungskriterium geeignet, da dieses an dem Relais ohne die Notwendigkeit der Kenntnis des Zustandes andere Komponenten des Systems wie beispielsweise des Kanalstatus oder des Zustandes der Quelle oder des Ziels, erfasst werden kann.

Vorzugsweise wird der Dekodierschwellwert für das Relais als Parameter zur Optimierung der Übertragung verwendet.

Weiterhin können erfindungsgemäß die Sendeleistungen, die den Phasen der Übertragung zugeordnet werden, als Parameter zur Optimierung der Übertragung verwendet. Diese werden besonders bevorzugt in Kombination mit dem Dekodierschwellwert als Parameter verwendet. Auf diese Weise lassen sich Kompromisse bezüglich der Fehlerfortpflanzung und erzielbaren Diversitätsgewinnen finden.

Erfindungsgemäß werden für die Entscheidung über das Dekodieren und Weiterleiten Fehlerdetektionskodes im gesendeten Signals verwendet. Diese Fehlerdetektionskodes stellen somit mit dem Signal verbundene Informationen dar, aus denen sich Eigenschaften des Signals, insbesondere dessen Qualität ermitteln lassen.

Prinzipiell können sämtliche bekannte Fehlerdetektionskodes verwendet werden. Beispiele für die Kodes sind beispielsweise die zyklische Redundanzüberprüfung (CRC) und die Low-Densitiy Parity Check Codes (LDPC).

Wird anhand des Fehlerdetektionskodes ein Dekodierungsfehler erkannt, so leitet das Relais das Signal nicht an das Ziel weiter.

Bei dem erfindungsgemäßen Verfahren kann es ausreichend sein, dass die Quelle ein Signal nur einmalig an das oder die Relais und das Ziel übermittelt. Hierdurch können Vorteile gegenüber anderen Verfahren erzielt werden. Beispielsweise ist das erfindungsgemäße Verfahren mit dieser Ausgestaltung wesentlich einfacher, als ein Verfahren bei dem im Falle des Nicht-Weiterleitens Seitens des oder der Relais die Quelle wiederholt das Signal an das Ziel sendet. In dem letztgenannten Fall muss nämlich die Quelle Informationen über den Status des oder der Relais besitzen.

Vorzugsweise wird das erfindungsgemäße Verfahren so ausgelegt, dass die resultierende Fehlerrate minimiert wird. In einer Ausgestaltung wird hierzu die Kenntnis der Dämpfungsverluste zwischen Quelle, Relais und Ziel zur Optimierung der Übertragung verwendet wird.

Mit dem erfindungsgemäßen Verfahren wird ein einfacher Weg gegeben eine kooperativen Diversifizierung in Relaisschaltungen drahtloser Netzwerke auszunutzen.

Gemäß einem weiteren Aspekt betrifft die Erfindung ein System zur Übertragung von Signalen in einem drahtlosen Relais-Netzwerk, das zumindest eine Quelle, ein Ziel und mindestens ein zwischengeschaltetes Dekodier-und-Weiterleitungs-Relais umfasst. Das Relais zeichnet sich dadurch aus, dass dieses eine Entscheidungseinheit für die Entscheidung über das Dekodieren und Weiterleiten eines Signals umfasst. Die Entscheidungseinheit kann einen Prozessor umfassen, der zur Ausführung eines Programms ausgestaltet ist. Erfindungsgemäß umfasst die Entscheidungseinheit eine Einheit zur Fehlerdetektion mittels eines Fehlerdetektionskodes. Bevorzugt umfasst das Ziel eine Kombinationseinheit zum Kombinieren von Signalen. In dieser Einheit kann insbesondere ein Signal, das zuvor von der Quelle erhalten wurde, mit einem kodierten Signal, das von einem Relais empfangen wurde kombiniert werden. Schließlich kann das Ziel eine Speichereinheit umfassen, in dem empfangene Signale gespeichert werden. Solche gespeicherten Signale stellen insbesondere Signale dar, die von der Quelle empfangen wurden.

Um auch in dem Fall, in dem das Relais entscheidet ein Signal nicht weiter zu leiten, eine Demodulation durchführen zu können ist in dem erfindungsgemäßen System die Demodulationseinheit so ausgestaltet, dass diese auf gespeicherte Signale zugreifen kann. Hierzu kann die Demodulationseinheit mit der Speichereinheit zumindest zeitweise verbunden werden.

Bevorzugt stellt das Relais ein mobiles Endgerät, besonders bevorzugt ein Mobiltelefon, dar.

Das erfindungsgemäße System ist so ausgestaltet, dass dieses zur Ausführung des erfindungsgemäßen Verfahrens geeignet ist. Vorteile und Merkmale, die bezüglich des erfindungsgemäßen Verfahrens beschrieben werden gelten entsprechend und soweit anwendbar auch für das erfindungsgemäße System.

Nachfolgend wird die Erfindung erneut im Detail beschrieben, wobei auf die beiliegenden Figuren Bezug genommen wird. Es zeigen:

Figur 1: zwei Ausführungsformen des erfindungsgemäßen Systems;

Figur 2: Abhängigkeit der Parameter des erfindungsgemäßen Verfahrens;

Figur 3: einen Vergleich des Leistungsverhalten einer Ausführungsform mit einem weiteren Verfahren; und

Figur 4: SNR-Gewinne des erfindungsgemäßen Verfahrens und konventionellen Relaying (L3DF) gegenüber Direktübertragung.

Das erfindungsgemäße Verfahren wird im folgenden auch als Protokoll, insbesondere als einfaches AdDF-Protokoll bezeichnet. Die Erfindung liefert ein einfaches Protokoll, das gleichzeitig zwei Potentiale nutzt, die durch drahtlose RelaisSysteme angeboten werden, (Diversitäts-Gewinne und Dämpfungseinsparungen (pathloss savings)). In der Beschreibung wird das Protokoll weiterhin analysiert. Mindestens ein zwischengeschaltetes Dekodier-und-Weiterleitungs-Relais unterstützt die Übertragung von Quelle zu Ziel; das Ziel kombiniert die Signale, die es von Quelle und Relais empfängt. Das Schlüsselmerkmal des vorgeschlagenen Systems und Verfahrens ist, dass der Relais-Knoten unabhängig entscheidet, ob die Information zu dem Ziel weitergeleitet wird oder nicht, wodurch die Gefahr einer Fehlerfortpflanzung minimiert wird, während tatsächlich konstruktive Diversitäts-Gewinne für die Kommunikation über Fading-Kanäle bereitgestellt werden. In Kombination mit Dämpfungseinsparungen führt dies zu signifikanten Gewinnen gegenüber sowohl der direkten Übertragung als auch dem konventionellen Relaying.

Im Folgenden wird die Erfindung unter Bezugnahme auf das erfindungsgemäße Protokoll genauer beschrieben

Wir schlagen ein einfaches adaptives Dekodier-und-Weiterleitungs-Protokoll (adaptive decode-and-forward AdDF) vor. Nach unserer Kenntnis wurde diese Terminologie zuerst in dem oben genannten Artikel "Cooperative Diversity in Wireless Networks: Efficient Protocols and Outage Behavior" verwendet.

Bei adaptiven Dekodier-und-Weiterleitungs-Protokollen wird erfindungsgemäß unterschieden zwischen dem einfachen und dem komplexen adaptiven Dekodier-und-Weiterleitungs-Protokoll.

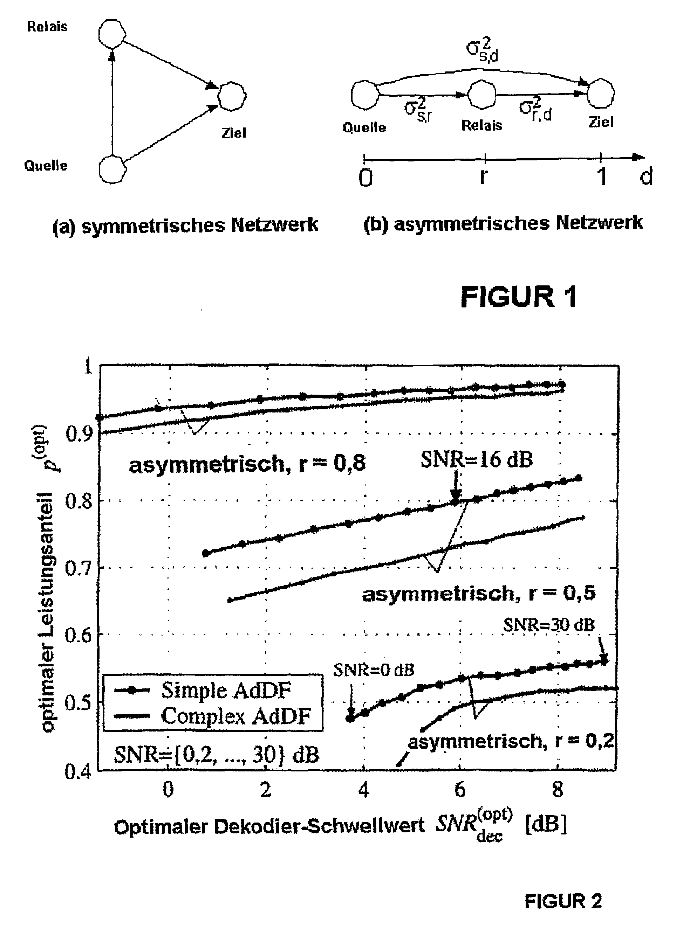

Zunächst wird ein einfaches AdDF (simple AdDF) beschrieben. Wir nehmen die Situation, die in Figur 1(a) gezeigt ist, an, in der eine Quelle Informationen direkt und über ein Relais an ein Ziel schickt. Die Kommunikation erfolgt in zwei Phasen, wie durch die Orthogonalitätseinschränkung (kein gleichzeitiges Senden und Empfangen auf einer Frequenz zur gleichen Zeit) vorgegeben:

In Phase 1 sendet die Quelle ihre Informationen. Sowohl das Relais als auch das Ziel empfangen abgeschwächte, verrauschte Versionen dieses Signals und das Ziel speichert diese Version zur späteren Verarbeitung. Das Relais misst das effektive Signal-Rausch-Verhältnis SNR des empfangenen Signals; wenn dieses oberhalb eines Dekodier-Schwellwertes $SNR_{dec}$ liegt, dekodiert es das Signal. Anderenfalls unterlässt es das Dekodieren. Erfindungsgemäß wird die Entscheidung über das Weiterleiten auf Basis einer zyklischen Redundanzüberprüfung (CRC) oder ähnlicher Verfahren zur Fehlererkennung durchgeführt. Ist die Überprüfung erfolgreich, d.h. wurde das empfangene Signal als fehlerfrei erkannt, so erfolgt die Weiterleitung. Andernfalls unterbleibt das Weiterleiten.

In Phase 2, wenn das Relais entschieden hat zu dekodieren, sendet es erneut eine neu kodierte Version an das Ziel. Das Ziel kombiniert die empfangene Version des Signals mit den gespeicherten Proben, die es zuvor von der Quelle empfangen hat. Anderenfalls, das heißt, wenn das Relais entschieden hat, nicht zu dekodieren, bleibt es einfach still. Das Ziel erkennt diesen Fall basierend auf dem Mangel an ausreichender Signalstärke und muss sich für die Demodulation auf die in Phase 1 gespeicherte Version, verlassen.

Dieses Protokoll erzielt räumliche Diversitäts-Gewinne, da das Relais für gute Kanalbedingungen häufig Kopien der ursprünglichen Informationen dekodiert und über einen unkorrelierten Kanal an das Ziel sendet. Gleichzeitig können wir von den Dämpfungseinsparungen profitieren: Eine Relais-Station, die zwischen der Quelle und dem Ziel angeordnet ist, wird die Nachrichten, die von der Quelle gesendet wurden, wesentlich zuverlässiger empfangen als das Ziel und diese muss außerdem eine beträchtlich geringere Sendeleistung verwenden, um das Ziel "zu erreichen".

Nun wird das komplexe AdDF (complex AdDF) beschrieben, das das Protokoll darstellt, das in dem oben genannten Artikel "Cooperative Diversity in Wireless Networks: Efficient Protocols and Outage Behavior" vorgeschlagen wird. Es unterscheidet sich von dem einfachen AdDF-Protokoll lediglich in den Fällen, in denen das Relais entschieden hat, nicht zu dekodieren. Wir erinnern uns, dass in diesem Fall sowohl das Relais als auch die Quelle in dem einfachen AdDF-Protokoll still bleiben. Das komplexe AdDF-Protokoll verhindert diese "Stille" jedoch, indem die Quelle ihre Nachricht wiederholt. Das Ziel kombiniert dann die beiden Versionen, die es in den beiden Phasen empfangen hat. Diese resultierenden Gewinne aus der Standard-Wiederholungskodierung bringen eine erhöhte Komplexität mit sich, da die Quelle Informationen über den Dekodier-Status des Relais besitzen muss.

Für die Auslegung des Verfahrens und des Systems zur Übertragung von Signalen sind die diese beeinflussende Parameter und notwendige Kompromisse zu beachten.

Zwei Parameter bestimmen das Leistungsverhalten des Protokolls. Der Dekodier-Schwellwert $SNR_{dec}$ definiert das minimale Signal-Rausch-Verhältnis, bei dem das Relais das von der Quelle gesendete Signal dekodiert. Man beachte den diesbezüglichen Kompromiss: ein hoher Schwellwert $SNR_{dec}$ verringert die Wahrscheinlichkeit eines Dekodierfehlers, wodurch das durch das weiterleitende Relais das verursachte Risiko der Fehlerfortpflanzung minimiert wird. Andererseits verringert ein solch hoher Dekodier-Schwellwert die Anzahl der Fälle, in denen das Relais dekodiert und weiterleitet, wodurch die Diversitäts-Vorteile reduziert werden. Bei Verwendung eines CRC oder eines anderen Fehlererkennungsmechanismus zur Weiterleitungsentscheidung entfällt die Wahl des Schwellwertes $SNR_{dec}$.

Der zweite wichtige Parameter ist der Anteil der Leistung, der in Phase 1 der Übertragung durch die Quelle zugeordnet ist. Um einen fairen Vergleich zu liefern ist es wichtig, dass die gesamte verbrauchte Energie des kooperativen Relais-Systems die des korrespondierenden Direktsystems nicht übersteigt. Demzufolge können wir in Phase 1 einen Anteil p der zur Verfügung stehenden Leistung für das Senden durch die Quelle verwenden, wodurch ein Leistungsanteil von 1-p für die zweite Phase verbleibt ($0 \leq p \leq 1$). Wiederum besteht ein Kompromiss: wird p sehr groß gewählt, so resultiert dies darin, dass das Relais mit hoher Wahrscheinlichkeit dekodieren wird, lässt aber letztendlich keine Leistung für das Relais, um in Phase 2 Diversitäts-Gewinne zu liefern. Wir halten fest, dass unser Ansatz auf einer strikten und konservativen Leistungs-Einschränkung basiert; kann dem Relais zusätzliche Leistung hinzugefügt werden, kann dies die Attraktivität des untersuchten Protokolls nur steigern.

Die optimale Einstellung für die Parameter $SNR_{dec}$ und p wird im Abschnitt III adressiert.

Im Folgenden wird der Vergleich des Leistungsverhaltens unterschiedlicher Protokolle beschrieben.

Wir untersuchen sowohl das einfache als auch das komplexe AdDF-Protokoll und vergleichen deren Leistungsverhalten mit der direkten SISO-Kommunikation, der Zwei-Zweig-Sende-Diversität (vgl. "A Simple Transmit Diversity Technique for Wireless Communications"S.M. Alamouti, IEEE J. Select. Areas Comm., Ausgabe 16 Nr. 8, Seiten 1451-1458, Okt. 1998), und dem konventionellen Relaying. Im konventionellen Relaying dekodiert das Relais in jedem Fall und das Ziel empfängt nur das Signal, das von dem Relais übertragen wird. Dies wird auch als Schicht-3-Dekodier-und-Weiterleitungs-Relaying (L3DF) bezeichnet.

Im Folgenden wird die Leistungsverhaltensanalyse, insbesondere die Analyse der Fehlerwahrscheinlichkeit, beschrieben.

In diesem Abschnitt zielen wir darauf ab, die End-zu-End-Bit-Fehlerrate für die zu betrachtenden Protokolle zu bestimmen.

Hierzu werden bezüglich eines Modulationsschemas, eines Kanalmodells, der Netzwerk-Geometrie und der Energie folgende Annahmen getroffen:

Modulationsschema: Die Zweiphasen-Natur der analysierten Relais-Protokolle verlangt nach einer Verdoppelung der spektralen Effizienz der individuellen Phasen im Vergleich zu der spektralen Effizienz der direkten Übertragung. Insbesondere untersuchen wir beispielhaft zwei Fälle:

(i) Binär-Phasenumtastung (binary phase shift keying BPSK) für direkte Übertragung und Quadratur-Phasenumtastung (quaternary phase shift keying QPSK) für die Relais-Schemata und (ii) QPSK für Direktübertragung und 16-QAM (16-Quadratur-Amplitudenmodulation) für die Relais-Schemata. Es sollte beachtet werden, dass der BPSK/QPSK-Vergleich etwas unfair ist: Die doppelte spektrale Effizienz wird in dem Relais-Fall praktisch ohne Verluste erzielt, da QPSK und BPSK das gleiche Leistungsverhalten aufweisen. Aus diesem Grund untersuchen wir den QPSK/16-QAM-Fall, wo die Gewinne aus der Dämpfungsreduktion und der räumlichen Diversität gegen den Signal-Rausch-Verhältnis-Verlust, der durch das Modulationsschema höherer Ordnung verursacht wird, konkurrieren. Die Bit-FehlerWahrscheinlichkeiten können in beiden Fällen unter Verwendung der Q-Funktion evaluiert werden:

$$P_e\left(SNR\right) \le aQ\left(\sqrt{bSNR}\right),\tag{1}$$

wobei $a = 1$, $b = 2$ für BPSK und QPSK, und, $a = 4/\log_2(16) = 1$, $b = 4/5$ für 16-QAM für Gray-Mapping (Gleichung (5.2-80) aus John G. Proakis, Digital Communications, McGraw-Hill International Editions, 4te Auflage, 2002, angepasst, um die Bitfehlerrate BER statt der Symbolfehlerrate SER zu erhalten).

Kanalmodell: Die Kommunikation erfolgt unkodiert, symbolweise über Flach-Frequenz-Schwund-Kanäle. Obwohl die Analyse auf einer per-Symbol-Basis ausgeführt wird, gelten die Ergebnisse ebenfalls für unkodierte Block-basierte Schemata bei einer Block-Fading-Annahme. Die Beträge $|h_{i,j}|$ der Kanalkoeffizienten folgen einer Rayleigh-Verteilung; demzufolge sind die Kanalleitungen $|h_{i,j}|^2$ exponentiell verteilt. Nimmt man an, dass der Parameter dieser exponentiellen Verteilung $\sigma_{i,j}^{-2}$ ist, so können die Effekte der Dämpfung und des Abstandes durch Variieren der mittleren Leistung $\sigma_{i,j}^2$ der Kanäle aufgenommen werden.

Netzwerk Geometrie: Man kann zwischen symmetrischen und asymmetrischen Netzwerkkonfigurationen unterscheiden: siehe Figur 1. In Figur 1 sind symmetrische und asymmetrische Netzwerk-Konfigurationen gezeigt. Kooperatives Relaying konzentriert sich oftmals auf den Fall von symmetrischen Netzwerken, um die gegenseitigen Vorteile des Zusammenwirkens zwischen Quelle und Relais hervorzuheben. Wird die Symmetrie geopfert, so können Dämpfungseinsparungen des asymmetrischen Szenarios genutzt werden, die häufig im Zusammenhang mit konventionellem Relaying untersucht werden. Um dies zu berücksichtigen, modellieren wir die Dämpfungen, d. h. die mittleren Kanalleistungen $\sigma_{i,j}^2$, als eine Funktion der relativen Relais-Position $r$ ohne an Allgemeingültigkeit zu verlieren, durch

$$\sigma_{s,d}^2 = 1, \quad \sigma_{s,r}^2 = r^{-\alpha}, \quad \sigma_{r,d}^2 = \left(1-r\right)^{-\alpha},\tag{2}$$

wobei $\alpha$ der Dämpfungsexponent, und $0 < r < 1$ ist. In diesem Dokument konzentrieren wir uns auf den Fall $\alpha = 3$.

Energie: Wir nehmen für direkte Übertragung SNR = $E_b/N_0$ pro Informationsbit an, das zwischen der Quelle und dem Relais in dem Fall von Relaying gemäß dem Leistungsanteil p der ersten Phase geteilt wird.

Die Bestimmung der Wahrscheinlichkeit eines Bit Fehlers wird im Folgenden betrachtet.

Wir konzentrieren uns in der folgenden Analyse auf den Fall, dass die Weiterleitungsentscheidung auf Basis des Dekodier-Schwellwert $SNR_{dec}$ erfolgt. Bei Verwendung eines CRC oder eines anderen Fehlererkennungsmechanismus wird die Fehlerfortpflanzung ohnehin eliminiert.

Wir beginnen mit der Betrachtung der Dekodierwahrscheinlichkeit. Hierzu betrachten wir die Wahrscheinlichkeit, dass das Relais das Signal, das durch die Quelle gesandt wurde, dekodiert. Das Relais dekodiert, wenn dessen empfangenes Signal-Rausch-Verhältnis SNR größer ist als der gewählte Dekodier-Schwellwert $SNR_{dec}$. Der momentane SNR wird durch die Fading-Kanal-Leistung $|h_{s,r}|^2$, den Leistungsanteil p, der der ersten Phase zugeordnet ist, und dem mittleren SNR bestimmt. Demzufolge ist der Dekodierfall:

$$|h_{s,r}|^2 \cdot p \cdot SNR > SNR_{dec} \Leftrightarrow |h_{s,r}|^2 > \frac{SNR_{dec}}{p \cdot SNR}.\tag{3}$$

da die Kanalleistung $|h_{s,r}|^2$ exponentiell verteilt ist mit einem Mittel $\sigma_{s,r}^2$, ergibt sich die Dekodierwahrscheinlichkeit als:

$$P_{dec} = \int_{\frac{SNR_{dec}}{p\cdot SNR}}^{\infty} \frac{1}{\sigma_{s,r}^2} e^{-\frac{\gamma}{\sigma_{s,r}^2}} d\gamma = \exp\left(-\frac{SNR_{dec}}{\sigma_{s,r}^2 \, pSNR}\right). \qquad (4)$$

Das Ergebnis der Bestimmung der Wahrscheinlichkeit eines Bit Fehlers wird im Folgenden beschrieben:

Die Fehlerwahrscheinlichkeit des adaptiven Dekodier-und-Weiterleitungs-Protokolls kann formuliert werden als:

$$P_e^{(\text{AdDF})} = P_{\text{dec}} \cdot P_e^{(\text{Div})} + (1 - P_{\text{dec}}) \cdot P_e^{(\text{Direct})}, \qquad (5)$$

wobei $P_{\text{dec}}$ die Dekodierwahrscheinlichkeit (4) und $P_e^{(\text{Div})}$ die Wahrscheinlichkeit ist, dass ein Fehler in der kombinierten Diversitäts-Übertragung von der Quelle und dem Relais an das Ziel auftritt. Weiterhin ist $P_e^{(\text{Direct})}$ die Wahrscheinlichkeit eines Fehlers, wenn das Relais entschieden hat, nicht zu dekodieren, wobei sich das Ziel dann auf die direkte Kommunikation von der Quelle verlassen muss. Beide Fehlerfälle werden im Folgenden untersucht.

Diversitäts-Übertragung: Diese tritt auf, wenn das Relais entschieden hat zu dekodieren und weiterzuleiten. In diesem Fall kombiniert das Ziel die Signale, die es von der Quelle in der ersten Phase und von dem Relais in der zweiten Phase empfangen hat. Die resultierende Fehlerwahrscheinlichkeit ist:

$$P_e^{(\text{Div})} = P_e^{(s,r)} P_e^{(x)} + \left(1 - P_e^{(s,r)}\right) P_e^{(2)}. \qquad (6)$$

Abhängig davon, ob das Relais korrekt dekodiert oder nicht, können zwei sich gegenseitig ausschließende Fehlerfälle zu einem Entscheidungsfehler an dem Ziel führen.

Zunächst besteht für einen schlecht gewählten Dekodier-Schwellwert die Gefahr eines Entscheidungsfehlers an dem Relais. Dieser tritt mit einer Wahrscheinlichkeit $P_e^{(s,r)}$ auf und hängt von dem Dekodier-Schwellwert $SNR_{\text{dec}}$ und dem effektiven mittleren SNR an dem Relais ab. Für den Dekodier-Schwellwert $\gamma_0 = SNR_{\text{dec}}$ und mittleren SNR $\overline{\gamma} = p\sigma_{s,r}^2 SNR$ kann die Wahrscheinlichkeit des Fehlers an dem Dekodierrelais in geschlossener Form unter Verwendung des Resultats der weiter unten beschriebenen Gleichung (21) bestimmt werden:

$$P_e^{(s,r)} = P_e^{(\gamma_0)}\left(SNR_{\text{dec}}, p\sigma_{s,r}^2 SNR\right). \qquad (7)$$

Im Fall eines solchen Entscheidungsfehlers überträgt das Relais ein fehlerhaftes Signal an das Ziel. Dies führt zu einer Fehlerfortpflanzung, da das Ziel wahrscheinlich widersprüchlichen Informationen von der Quelle und dem Relais gegenübersteht. Wir nähern die resultierende Fehlerwahrscheinlichkeit mit $P_e^{(x)} \leq 1/2$. Eine solche Fehlerfortpflanzung sollte durch geeignete Wahl des $SNR_{\text{dec}}$ an dem Relais verhindert werden, bzw. wird durch Verwendung eines CRC oder eines anderen Fehlererkennungsmechanismus vollständig eliminiert.

Zweitens, wenn das Relais korrekt dekodiert hat (mit einer Wahrscheinlichkeit von $1 - P_e^{(s,r)}$) leitet es ein frisch kodiertes Signal an das Ziel. Dies ist der gewünschte Fall der Nutzung der räumlichen Diversität, da das Ziel dieses Signal mit der Version, die es in der ersten Phase von der Quelle empfangen hat, kombiniert. Die Fehlerrate $P_e^{(2)}$ dieser Diversitäts-Kombinierung hängt von den effektiven SNRs der zwei betroffenen Kanäle ab. Diese sind $\overline{\gamma}_1 = p\sigma_{s,d}^2 SNR$ für den Kanal von der Quelle zu dem Ziel und $\overline{\gamma}_2 = (1-p)\sigma_{r,d}^2 SNR$ für den Kanal von dem Relais zu dem Ziel. Eine geschlossene Lösung von $P_e^{(2)}$ wird in (22) in Appendix C für den neuen Fall $\bar{\gamma}_1 \neq \bar{\gamma}_2$ geliefert.

Keine Diversitäts-Übertragung: Wenn das Relais entschieden hat nicht zu dekodieren, dann muss sich das Ziel auf den direkten Kanal von der Quelle zu dem Ziel verlassen. Für das vorgeschlagene einfache AdDF-Protokoll, bei dem das Relais und die Quelle in der zweiten Phase still bleiben, ist der effektive SNR an dem Ziel $p\sigma_{s,d}^2 SNR$.

Für das komplexe AdDF-Protokoll verwendet die Quelle einen Leistungsanteil von p für die Sendephase und einen Anteil von 1- $p$ für die Wiederholungskodierung in Phase zwei, was in einem kombinierten effektiven SNR von

$(p + (1-p))\sigma_{s,d}^2 SNR = \sigma_{s,d}^2 SNR$ an dem Ziel resultiert. Daher ist für die Kommunikation über den Rayleigh-Kanal von der Quelle zu dem Ziel (Gleichung (14.3-7) aus John G. Proakis, Digital Communications, McGraw-Hill International Editions, 4te Auflage, 2002)]

$$P_e^{(\text{Direct})} = \frac{1}{2}\left(1 - \sqrt{\frac{SNR_{\text{eff}}}{1 + SNR_{\text{eff}}}}\right), \tag{8}$$

mit

$$SNR_{\text{eff}} = \begin{cases} p\sigma_{s,d}^2 SNR & \text{SimpleAdDF} \\ \sigma_{s,d}^2 SNR & \text{ComplexAdDF} \end{cases}. \tag{9}$$

An diesem Punkt haben wir eine geschlossene Lösung für die Fehlerwahrscheinlichkeit des vorgeschlagenen Protokolls über Rayleigh-Fading-Kanäle (unter Verwendung von (4), (6), (7), (22), und (8) in (5)) erhalten.

Nachfolgenden wird nun die Optimierung des Protokolls beschrieben:

Wir erinnern uns, dass die zwei Parameter, die das vorgeschlagene Protokoll regeln, sind: Der Leistungsanteil p der ersten Phase und der Dekodier-Schwellwert $SNR_{dec}$ an dem Relais. Beide sollten so gewählt werden, dass die resultierende Bitfehlerrate BER minimiert wird. Aufgrund der im wesentlichen nicht algebraischen Formeln ist das Herleiten von geschlossenen Optimierungsregeln nicht möglich; leider gilt das gleiche für Vereinfachungen durch Reihenentwicklung.

Dennoch kann man unter Verwendung der erhaltenden geschlossenen Ausdrücke die optimalen Parameter numerisch festgelegt finden. Dies erlaubt es wiederum empirische Regeln aufzustellen. Figur 2 zeigt die jeweils resultierenden optimalen Parameter für verschiedene Kombinationen von SNR und Netzwerkgeometrie für das BPSK/QPSK-Szenario.

Figur 2 zeigt optimale Parameter-Kombinationen, die die Fehlerwahrscheinlichkeit minimieren: optimaler Leistungsanteil p$^{(opt)}$ beziehungsweise optimaler Dekodier-Schwellwert $SNR_{dec}^{(opt)}$. Die optimalen Werte hängen von SNR und der Netzwerk-Konfiguration ab. Die Ergebnisse wurden durch numerische Auswertung (5) für das BPSK/QPSK-Schema erhalten. Die Markierungen korrespondieren mit den SNR-Werten in Schritten von 2 dB.

Beispielsweise wählen wir, wenn das Relais auf der Hälfte zwischen der Quelle und dem Ziel (r=0,5) angeordnet und SNR = 16 dB ist, einen Leistungsanteil der ersten Phase p = 0,8 und einen Dekodier-Schwellwert $SNR_{dec}$ = 6 dB an dem Relais. Allgemein lässt sich der Figur entnehmen, dass der optimale Leistungsanteil p$^{(opt)}$ nicht stark von dem SNR abhängt, sondern maßgeblich von der zugrunde liegenden Netzwerkgeometrie beeinflusst wird.

Wir erkennen, dass je größer der relative Abstand von der Quelle zu dem Relais ist, desto mehr Leistung sollte für die Übertragung von der Quelle zugeordnet werden - ein intuitives Ergebnis.

Nachfolgenden wird auf Optimierungsregeln eingegangen. Wir erinnern uns, dass das Protokoll darauf abzielt, die Diversitäts-Gewinne zu maximieren. Dies wird im wesentlichen durch gleiche SNRs der zwei Diversitäts-Zweige erzielt; in unserem Fall setzt dies gleiche SNRs der Kanäle von der Quelle und dem Relais zu dem Ziel voraus. Um jedoch den Kompromiss zwischen Diversitäts-Gewinnen und der Dekodier-Fehlerwahrscheinlichkeit an dem Relais zu berücksichtigen, führen wir einen Skalierfaktor s ein. Dies führt zu der folgenden Bedingung für den optimierten Leistungsanteil der ersten Phase p:

$$sp\sigma_{s,d}^2 SNR = (1-p)\sigma_{r,d}^2 SNR, \tag{10}$$

welche, nach p aufgelöst, ergibt

$$p^{(opt)} = \frac{1}{1 + s\dfrac{\sigma_{s,d}^2}{\sigma_{r,d}^2}} \tag{11}$$

Durch Kurvennachbildung haben wir herausgefunden, dass $s \approx 2,5$ angemessen ist. Weiterhin haben wir einen Näherungsausdruck für den optimalen Dekodier-Schwellwert erhalten. Den Ergebnissen lässt sich entnehmen, dass ein Auswählen von $SNR_{dec}$ gemäß

$$SNR_{dec}^{(opt)}[dB] \approx A\sqrt{1.8 \cdot p\sigma_{s,r}^2 SNR[dB]}, \tag{12}$$

die Wahrscheinlichkeit eines Fehlers minimiert, wenn dieser zusammen mit dem optimalen Leistungsanteil (11) angewendet wird. Der Parameter ist A = 1 für BPSK/QPSK und A = 1,5 für das QPSK/16-QAM-Szenario. Schließlich haben wir erkannt, dass symmetrische Netzwerke genau wie asymmetrische Netzwerke mit $\sigma_{s,r}^2 = \sigma_{r,d}^2$ für große SNR parametrisiert werden können.

Im Folgenden werden die Leistungsverhaltensgrenzen untersucht.

Bevor das Leistungsverhalten des AdDF-Protokolls untersucht wird, betrachten wir kurz drei verschiedene Alternativen.

1) Direktübertragung: Die Fehlerrate ist gegeben durch (8) mit $SNR_{eff} = \sigma_{s,d}^2 SNR$, das den SNR des direkten Kanals von der Quelle zu dem Ziel darstellt.

2) Sendediversität: Die Fehlerrate für ein Zwei-Zweig-Diversitäts-System mit gleichen SNRs in jedem der Zweige ist gegeben durch (Gleichung (14.4-15) aus John G. Proakis, Digital Communications, McGraw-Hill International Editions, 4te Auflage, 2002)

$$P_e^{(2,TxDiv)} = \frac{1}{2} - \frac{\sqrt{SNR_{eff}}\left(3 + 2SNR_{eff}\right)}{4\left(1 + SNR_{eff}\right)^{\frac{3}{2}}} \tag{13}$$

Ein Beispiel ist Alamouti's Schema [4]. Der effektive SNR der beiden Kanäle zwischen der Quelle und dem Ziel ist $SNR_{eff} = p\sigma_{s,d}^2 SNR$, mit $p$ = 0.5 für die Sendediversität.

3) Dekodierung und Weiterleitung an Ebene 3: In dem Fall eines konventionellen Relayings agiert das Relais als ein einfacher Weiterleiter und das Ziel ist nur abhängig von den Informationen, die durch das Relais gesendet wurden. Das Leistungsverhalten dieses Protokolls ist:

$$P_e^{(L3DF)} = 1 - \left(1 - P_e^{(s,r)}\right)\left(1 - P_e^{(r,d)}\right), \tag{14}$$

wobei $P_e^{(s,r)}$ und $P_e^{(r,d)}$ die Fehlerraten für Kommunikation über die zwei sukzessiven Rayleigh-Fading-Kanäle ist, gegeben durch (8) mit effektiven SNRs $p\sigma_{s,r}^2 SNR$ beziehungsweise $(1-p)\sigma_{r,d}^2 SNR$. Das Protokoll profitiert von Dämpfungseinsparungen, aber nicht von räumlicher Diversität. Die Bitfehlerrate BER ist offensichtlich bei $P_e^{(s,r)} = P_e^{(r,d)}$ minimiert, was zu einem optimalen Leistungsanteil von

$$p_{(L3DF)}^{(opt)} = \frac{1}{1 + \sigma_{r,d}^2 / \sigma_{s,r}^2} \tag{15}$$

führt.

Wir wenden uns nun dem Vergleich des AdDF-Protokolls mit diesen konventionellen Schemata zu.

Zusammenfassend können somit folgende Aussagen getroffen werden:

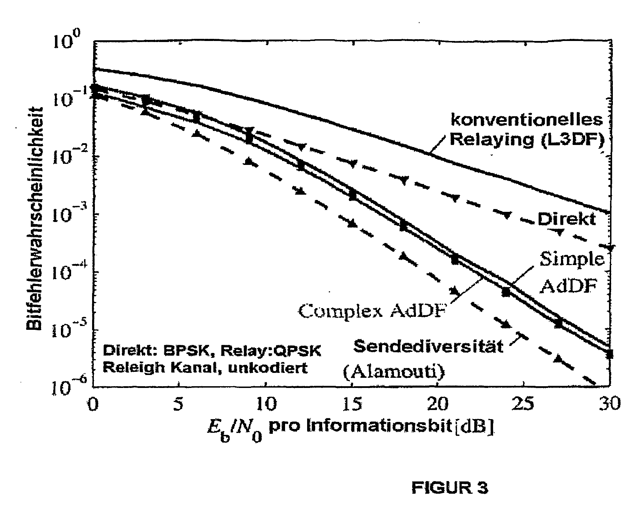

Wir beginnen damit das Leistungsverhalten für symmetrische Netzwerke zu diskutieren. Figur 3 vergleicht das Leistungsverhalten des vorgeschlagenen einfachen AdDF-Protokolls mit dem komplexen AdDF-Protokoll und deren Leistungsgrenzen.

Figur 3 zeigt die Bitfehlerrate über der Symbolfehlerrate für das vorgeschlagene adaptive Dekodier-und-Weiterleitungs-Protokoll im Vergleich zur Direktübertragung, dem Relaying an Schicht 3 (L3DF) und der Sendediversität. Symmetrisches Netzwerk. Durchgezogene Linien: Simulation, Vierecke: Analyse (für AdDF).

Beide AdDF-Protokolle erzielen gegenüber der direkten Übertragung und dem konventionellen Relaying Diversitäts-Gewinne. So erzielen die kooperativen Protokolle beispielsweise bei BER=$10^{-2}$ Gewinne von ungefähr 2-3dB. Es ist zu beachten, dass das komplexe Protokoll nur geringfügig besser funktioniert als dessen einfaches Gegenstück. Dies ist begründet in der Tatsache, dass die Gewinne vom Wiederholungskodieren in Phase zwei, für das nur ein kleiner Leistungsanteil 1-p zur Verfügung steht, nicht wesentlich sind. Es kann geschlussfolgert werden, dass das einfache und das komplexe AdDF sehr ähnlich in ihrem Leistungsverhalten sind; daher konzentrieren wir uns in dem Rest des Dokumentes nur auf die einfache Version. Schließlich sehen wir, dass die Analyse und Simulationsresultate übereinstimmen; Unterschiede basieren auf der Näherung von $P_e^{(x)}$ in (6).

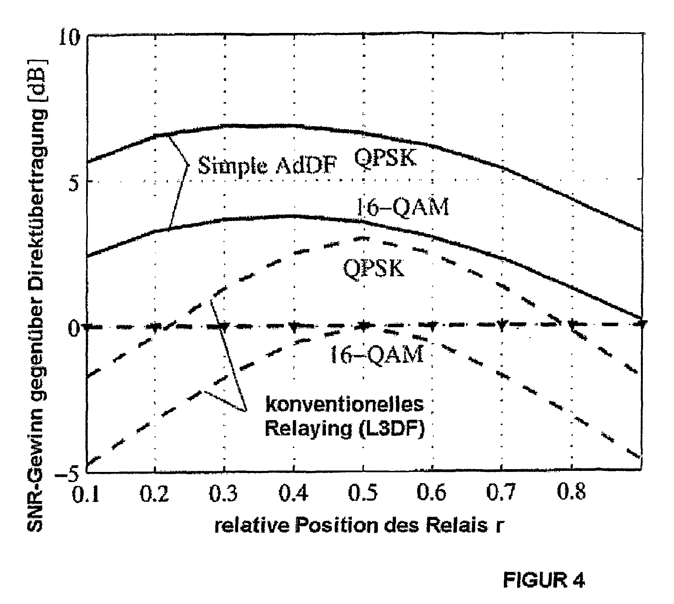

Nunmehr werden asymmetrische Netzwerke betrachtet. Das vorgeschlagene AdDF-Protokoll ist ausgelegt, um sowohl von Diversitäts-Gewinnen als auch von Dämpfungseinsparungen zu profitieren. Der letztgenannte Vorteil sollte in asymmetrischen Netzwerken sichtbar werden, bei denen das Relais zwischen der Quelle und dem Ziel angeordnet ist. In der Tat wird durch Figur 4 bestätigt, dass wesentliche Verbesserungen erhalten werden können, indem das einfache AdDF-Protokoll verwendet wird.

Figur 4 zeigt SNR-Gewinne des einfachen AdDF und konventionellen Relaying (L3DF) gegenüber Direktübertragung. Während L3DF Dämpfungseinsparungen nutzt, profitiert das kooperative AdDF-Protokoll zusätzlich von Diversitäts-Gewinnen. Die Parameter sind BER = $10^{-2}$ und Dämpfungsexponent $\alpha$=3,0.

Das Diagramm zeigt den SNR-Gewinn gegenüber direkter Übertragung bei BER=$10^{-2}$ als eine beschreibende Leistungsmessung für uncodierte Einstellungen beider untersuchter Modulations-Schemata (BPSK/QPSK und QPSK/16-QAM).

Wir sehen, dass durch die Nutzung der Diversität das kooperative Protokoll das konventionelle Relais-Protokoll um mindestens 3 dB für beide spektralen Effizienzen und für alle untersuchten Relais-Positionen übertrifft. Als nächstes stellen wir fest, dass der SNR-Verlust (vgl. oben genannten Artikel "Cooperative Diversity in Wireless Networks: Efficient Protocols and Outage Behavior"), der durch die Verwendung einer höheren spektralen Effizienz auftritt, zu einem korrespondierenden schlechteren Leistungsverhalten des Relaisprotokolls verglichen mit der direkten Übertragung führt. Beispielsweise führt die Anordnung des Relais auf der Hälfte zwischen der Quelle und dem Ziel (r=0.5) und die Verwendung von QPSK für kooperative Relais-Übertragung zu einem SNR-Gewinn von 6,6 dB gegenüber der direkten Übertragung mit BPSK. Dieser. Gewinn reduziert sich auf 3,6 dB, wenn 16-QAM-Relais-Übertragung statt der direkten QPSK-Übertragung verwendet wird. Letztendlich lässt sich dem negativen SNR-Gewinn entnehmen, dass das konventionelle L3DF-Protokoll mit 16-QAM schlechter funktioniert, als die direkte QPSK-Übertragung. Es lohnt sich zu wiederholen, dass diese Resultate unter einer strikten Normalisierung von Leistung, Verzögerung und Bandbreite erhalten wurden.

Bezüglich der Implementation des Protokolls kann festgestellt werden, dass das vorgeschlagene einfache AdDF-Protokoll konventionellen Relaying-Protokollen ähnlich ist. Da das Relais unabhängig entscheidet, ob es dekodiert und weiterleitet oder nicht, besteht kein Bedarf an Feedback-Informationen. Tatsächlich ist das Protokoll nur abhängig von der Kenntnis des mittleren SNR bzw. der Verwendung eines CRC oder eines anderen Fehlererkennungsmechanismus und den mittleren Langzeit-Dämpfungen zwischen den korrespondierenden Knoten. An den Sendern ist daher eine explizite Kenntnis über Kanal-Status-Informationen nicht notwendig, aber wie üblich, werden Schätzungen der Kanalkoeffizienten für das Kombinieren und die Demodulation an den Empfängern benötigt. Bezüglich der Synchronisation gelten die gleichen Voraussetzungen wie für konventionelles Relaying.

Mit der vorliegenden Erfindung wurde ein einfaches adaptives Dekodier-und-Weiterleitungs-Protokoll vorgeschlagen, das ausgelegt ist die Dämpfungseinsparungen von konventionellem Relaying mit den räumlichen Diversitiäts-Gewinnen von kooperativem Relaying zu kombinieren. Zwei Parameter, namentlich der Dekodier-Schwellwert, der von dem Relais verwendet wird, und der Anteil der gesamten Leistung, der der Übertragung von der Quelle zugeordnet ist, erlauben es, das Protokoll an bestimmte SNR-Regime und Dämpfungsbedingungen anzupassen. Die erhaltenen geschlossenen Ausdrücke für die End-zu-End-Fehler-Wahrscheinlichkeit haben geholfen, Regeln für das Anpassen der Parameter zu finden. Diese basieren auf der Kenntnis über den mittleren SNR und mittlere Dämpfungen; Kanal-Status-Informationen sind an den Sendern nicht notwendig.

Das einfache AdDF-Schema zeigt SNR-Gewinne von bis zu sieben Dezibel gegenüber direkter Übertragung, während sich gezeigt hat, dass konventionelles Relaying drei Dezibel erzielt. Diese Ergebnisse wurden unter einer strikten Normalisierung von Leistung, Bandbreite und Verzögerung für eine symbolweise Kommunikation über Rayleigh-Fading-Kanäle erhalten. Schließlich stellen wir fest, dass das kooperative Protokoll die gleiche Anzahl von Übertragungsknoten wie das konventionelle Relaying hat, was ein erstes vielversprechendes Anzeichen des System-Ebenen-Leistungsverhaltens in Interferenz-begrenzten Szenarien sein kann.

Unter Berücksichtigung dieser Ergebnisse glauben wir, dass das vorgeschlagene adaptive Dekodier-und-Weiterleitungs-Protokoll ein interessanter Kandidat für zukünftige drahtlose Netzwerke ist.

Die in der obigen Beschreibung verwendeten Fehlerwahrscheinlichkeiten werden im folgenden beschrieben.

Zunächst wird die Fehlerwahrscheinlichkeit für beliebige Fading-Statistiken betrachtet.

Im Folgenden bestimmen wir verschiedene Fehlerwahrscheinlichkeiten für BPSK, QPSK und 16-QAM-Signalisierung über Fading-Kanäle. Die Statistik eines solchen Fading-Kanals soll beschrieben werden durch eine Wahrscheinlichkeits-Dichtefunktion $p_\gamma(\gamma)$, wobei $\gamma$ das Signal-Rausch-Verhältnis, und $\gamma_a \leq \gamma \leq \gamma_h$. ist. Für einen Rayleigh-Fading-Kanal ist der SNR beispielsweise exponentiell verteilt mit $\gamma_a = 0$ und $\gamma_b \to \infty$. Wir beginnen mit dem Herleiten der Fehlerwahrscheinlichkeit für eine allgemeine Wahrscheinlichkeits-Dichtefunktion (pdf) $p_\gamma(\gamma)$, die dann auf spezielle Fälle angewendet wird.

Die mittlere Wahrscheinlichkeit von Fehlern ist gegeben durch:

$$P_e = \int P_e(\gamma) p_\gamma(\gamma) d\gamma \qquad (16)$$
$$\leq \int_{\gamma_a}^{\gamma_b} a Q\left(\sqrt{b\gamma}\right) p_\gamma(\gamma) d\gamma,$$

mit $P_e(\gamma)$ gemäß (1) für die unterschiedlichen Modulationsschemata. Führt man:

$$u(\gamma) = \int p_\gamma(\gamma) d\gamma \qquad (17)$$

ein, so erhalten wir durch partielle Integration von (16)

$$P_e \leq u(\gamma) a Q\left(\sqrt{b\gamma}\right)\Big|_{\gamma=\gamma_a}^{\gamma_b} - \int_{\gamma_a}^{\gamma_b} \frac{d}{d\gamma}\left\{a Q\left(\sqrt{b\gamma}\right)\right\} u(\gamma) d\gamma.$$

Die Anwendung der Definition der Q-Funktion und Verwendung der Leibnitz-Regel (vgl. Gleichung (0.410) S. 23, I.S. Gradshteyn and I.M. Ryzhik, Table of Integrals, Series, and Products, Academic Press, San Diego, CA, 5te Auflage, 1994) führt nach Vereinfachung zu

$$P_e \le u(\gamma)aQ\left(\sqrt{b\gamma}\right)\Big|_{\gamma=\gamma_a}^{\gamma_b} + \frac{a\sqrt{b}}{2\sqrt{2\pi}}\int_{\gamma_a}^{\gamma_b}\frac{1}{\sqrt{\gamma}}u(\gamma)e^{-\frac{b}{2}\gamma}d\gamma. \tag{18}$$

Unter Verwendung dieses allgemeinen Ergebnisses werden wir nun die Fehlerwahrscheinlichkeit für spezielle, zu betrachtende Fading-Statistiken $p_\gamma(\gamma)$ bestimmen.

Nachfolgend wird die Fehlerwahrscheinlichkeit an einem Dekodier-Relais ermittelt.

Wir betrachten den speziellen Fall von Kommunikation über einen einzigen Rayleigh-Fading-Kanal, wo eine Detektion nur durchgeführt wird, wenn der momentane SNR einen Schwellwert $\gamma_0$ übersteigt. Die resultierende pdf des effektiven SNR ist eine abgebrochene Exponentialfunktion:

$$p_\gamma^{(\gamma_0)}(\gamma) = \begin{cases} 0 & \gamma < \gamma_0 \\ \dfrac{1}{c}\dfrac{1}{\bar{\gamma}}\exp\left(-\dfrac{\gamma}{\bar{\gamma}}\right) & \gamma \ge \gamma_0 \end{cases}, \tag{19}$$

wobei $\bar{\gamma}$ der mittlere SNR des Rayleigh-Fading-Kanals und $c = exp(-\gamma_0/\bar{\gamma})$ eine Normalisierungskonstante ist, die eine Einheitsfläche unter der pdf sicherstellt.

Wir wenden nun das allgemeine Ergebnis (18) an. Für das zu lösende Problem ist die pdf gestützt von $\gamma_a = \gamma_0$ to $\gamma_h \to \infty$, sodass $u(\gamma) = -(1/c)exp(-\gamma/\bar{\gamma})$ unter Verwendung von (19) in (17). Dies führt zu:

$$P_e^{(\gamma_0)}(\gamma_0, \bar{\gamma}) \le aQ\left(\sqrt{b\gamma_0}\right) - \frac{a\sqrt{b}}{2c\sqrt{2\pi}}\int_{\gamma_0}^{\infty}\frac{1}{\sqrt{\gamma}}e^{-\left(\frac{b}{2}+\frac{1}{\bar{\gamma}}\right)\gamma}d\gamma.$$

Ersetzt man

$$\left(\frac{b}{2}+\frac{1}{\bar{\gamma}}\right)\gamma = \frac{t^2}{2}, \tag{20}$$

wobei $t$ als eine neue Integrationsvariable eingeführt wurde und wendet man die Definition der Q-Funktion an, so führt dies zu

$$P_e^{\gamma_0}(\gamma_0, \bar{\gamma}) \le aQ\left(\sqrt{b\gamma_0}\right) - ae^{\frac{\gamma_0}{\bar{\gamma}}}\sqrt{\frac{1}{1+\frac{2}{b\bar{\gamma}}}}Q\left(\sqrt{2\gamma_0\left(\frac{b}{2}+\frac{1}{\bar{\gamma}}\right)}\right) \tag{21}$$

für $\gamma_0 = 0$, $a=1$, $b=2$ erhalten wir die wohlbekannte Wahrscheinlichkeit des Fehlers für BPSK/QPSK-Übertragung über einen Rayleigh-Fading-Kanal; siehe Gleichung (14.3-7) von John G. Proakis, Digital Communications, McGraw-Hill International Editions, 4te Auflage, 2002.

Schließlich betrachten wir Fehlerwahrscheinlichkeit für Diversitäts-Empfang.

Um die Wahrscheinlichkeit des Fehlers zu bestimmen, die für Maximal Ratio Combining (MRC) von L Diversiäts-Zweigen resultiert, muss die pdf der Summe von L Zufalls-SNR-Variablen berechnet werden. Für unser verteiltes Diversitäts-Protokoll werden die zwei Signale von unterschiedlichen Terminals übertragen und passieren durch Kanäle mit unterschiedlichen Dämpfungen.

Daher haben wir unterschiedliche mittlere SNRs ($\bar{\gamma}_1 \neq \bar{\gamma}_2$) an dem Eingang des Maximal Ratio Combiners; in diesem Fall können Standardergebnisse nicht angewendet werden [5]. Wir beginnen mit der Berechnung der pdf des kombinierten SNR. Jede der beiden exponentiellen pdfs ist gegeben durch

$$p_{\gamma_i}(\gamma_i) = \frac{1}{\bar{\gamma}_i} \exp\left(-\frac{\gamma_i}{\bar{\gamma}_i}\right), \quad \gamma_i > 0, \quad i = 1, 2.$$

Die pdf der Summe von zwei unkorrelierten Zufallsvariablen ist die Faltung der korrespondierenden pdfs:

$$p_{\gamma}(\gamma) = p_{\gamma_1} * p_{\gamma_2} = \int p_{\gamma_1}(\gamma_1) p_{\gamma_2}(\gamma - \gamma_1) d\gamma_1.$$

für $\gamma_1 \neq \gamma_2$ vereinfacht sich dies zu

$$p_{\gamma}(\gamma) = \frac{1}{\bar{\gamma}_1 - \bar{\gamma}_2}\left(e^{-\frac{\gamma}{\bar{\gamma}_1}} - e^{-\frac{\gamma}{\bar{\gamma}_2}}\right)$$

Aus (17) erhalten wir

$$u(\gamma) = \frac{1}{\bar{\gamma}_2 - \bar{\gamma}_1}\left(\bar{\gamma}_1 e^{-\frac{\gamma}{\bar{\gamma}_1}} - \bar{\gamma}_2 e^{-\frac{\gamma}{\bar{\gamma}_2}}\right).$$

Wird dies in (18) verwendet und erneut die Substitution (20) angewendet, erhalten wir letztendlich die Fehlerwahrscheinlichkeit für MRC von zwei Rayleigh-Fading-Kanälen mit unterschiedlichen mittleren SNRs $\bar{\gamma}_1, \bar{\gamma}_2$ als:

$$P_e^{(2)} \leq \frac{a}{2}\left(1 - \frac{\sqrt{2b}}{2(\bar{\gamma}_1 - \bar{\gamma}_2)}\left(\bar{\gamma}_1\sqrt{\frac{\bar{\gamma}_1}{1+\bar{\gamma}_1}} - \bar{\gamma}_2\sqrt{\frac{\bar{\gamma}_2}{1+\bar{\gamma}_2}}\right)\right) \qquad (22)$$

**Patentansprüche**

1. Verfahren zur Übertragung von Signalen in einem drahtlosen kooperativen Relais-Netzwerk, wobei die Übertragung zwischen einer Quelle, einem Ziel und mindestens einem zwischengeschalteten Relais erfolgt, wobei das mindestens eine Relais als Dekodier-und-Weiterleitungs-Relais fungiert und die Übertragung in mindestens zwei Phasen erfolgt, dass das mindestens eine Relais unabhängig von Informationen bezüglich anderer Komponenten des Netzwerkes entscheidet, ob ein von der Quelle oder von mindestens einem anderen Relais empfangenes Signal dekodiert und weitergeleitet wird , **dadurch gekennzeichnet, dass** für die Entscheidung über das Dekodieren und Weiterleiten Fehlerdetektionskodes im gesendeten Signal verwendet werden.

2. Verfahren nach Anspruch 1, **dadurch gekennzeichnet, dass** die Sendeleistungen, die den Phasen der Übertragung zugeordnet werden, als Parameter zur Optimierung der Übertragung verwendet werden.

**3.** Verfahren nach Anspruch 1, **dadurch gekennzeichnet, dass** als Fehlerdetektionskode zyklische Redundanz Überprüfungscodes oder Low-Density Parity Check Codes verwendet werden.

**4.** Verfahren nach einem der Ansprüche 1 oder 3, **dadurch gekennzeichnet, dass** das Relais bei Erkennung eines Dekodierungsfehlers mittels Fehlerdetektionskodes das Signal nicht an das Ziel weiterleitet.

**5.** Verfahren nach einem der Ansprüche 1 bis 4, **dadurch gekennzeichnet, dass** die Quelle ein Signal nur einmalig an das oder die Relais und das Ziel übermittelt.

**6.** Verfahren nach einem der Ansprüche 1 bis 5, **dadurch gekennzeichnet, dass** dieses zur Minimierung der resultierenden Fehlerrate ausgelegt ist.

**7.** Verfahren nach Anspruch 6, **dadurch gekennzeichnet, dass** die Kenntnis der Dämpfungsverluste zwischen Quelle, Relais und Ziel zur Optimierung der Übertragung verwendet wird.

**8.** System zur Übertragung von Signalen in einem drahtlosen kooperativen Relais-Netzwerk, das zumindest eine Quelle, ein Ziel und mindestens ein zwischengeschaltetes Dekodier-und-Weiterleitungs-Relais umfasst, **dadurch gekennzeichnet, dass** das Relais eine Entscheidungseinheit für die Entscheidung über das Dekodieren und Weiterleiten eines Signals umfasst, und dass die Entscheidungseinheit eine Einheit zur Fehlerdetektion mittels eines Fehlerdetektionskodes umfasst.

**9.** System nach Anspruch 8, **dadurch gekennzeichnet, dass** das Ziel eine Kombinationseinheit zum Kombinieren von Signalen umfasst.

**10.** System nach Anspruch 8 oder 9, **dadurch gekennzeichnet, dass** das Ziel eine Speichereinheit umfasst, in dem empfangene Signale gespeichert werden.

**11.** System nach Anspruch 10, **dadurch gekennzeichnet, dass** das Ziel eine Demodulationseinheit umfasst, die auf gespeicherte Signale zugreifen kann.

**12.** System nach einem der Ansprüche 8 bis 11, **dadurch gekennzeichnet, dass** das Relais ein mobiles Endgerät darstellt.

**13.** System nach einem der Ansprüche 8 bis 11, **dadurch gekennzeichnet, dass** dieses zum Durchführen des Verfahrens nach einem der Ansprüche 1 bis 7 ausgelegt ist.

**Claims**

**1.** Method of transmitting signals in a wireless co-operative relay network, wherein the transmission takes place between a source, a destination and at least one intermediate relay, the at least one relay acting as a decoding and passing-on relay and the transmission taking place in at least two phases, the at least one relay deciding, independently of information relating to other components of the network, whether a signal received from the source or from at least one other relay is decoded and passed on, **characterised in that** error detection codes in the transmitted signal are used to make the decision whether to decode it and pass it on.

**2.** Method according to claim 1, **characterised in that** the transmission performances allocated to the phases of the transmission are used as parameters for optimising the transmission.

**3.** Method according to claim 1, **characterised in that** cyclic redundancy checking codes or low-density parity check codes are used as the error detection code.

**4.** Method according to one of claims 1 or 3, **characterised in that** in the event of a decoding error being detected by means of error detection codes the relay does not pass the signal on to the destination.

**5.** Method according to one of claims 1 to 4, **characterised in that** the source transmits a signal only once to the relay or relays and the destination.

**6.** Method according to one of claims 1 to 5, **characterised in that** it is designed to minimise the resulting error rate.

**7.** Method according to claim 6, **characterised in that** the knowledge of the attenuation losses between the source, relay and destination is used to optimise the transmission.

**8.** System for transmitting signals in a wireless co-operative relay network, which comprises at least one source, a destination and at least one decoding and passing-on relay, **characterised in that** the relay comprises a decision unit for deciding whether to decode and pass on a signal, and **in that** the decision unit comprises a unit for detecting errors by means of an error detection code.

**9.** System according to claim 8, **characterised in that** the destination comprises a combination unit for combining signals.

**10.** System according to claim 8 or 9, **characterised in that** the destination comprises a storage unit in which received signals are stored.

**11.** System according to claim 10, **characterised in that** the destination comprises a demodulation unit which is able to access stored signals.

**12.** System according to one of claims 8 to 11, **characterised in that** the relay represents a mobile terminal.

**13.** System according to one of claims 8 to 11, **characterised in that** it is designed to carry out the method according to one of claims 1 to 7.

**Revendications**

**1.** Procédé servant à transmettre des signaux dans réseau à relais coopératif sans fil, sachant que la transmission a lieu entre une source, une destination et au moins un relais intercalé entre ces dernières, sachant que le relais au moins au nombre de un fait office de relais de décodage et de transfert et que la transmission a lieu en au moins deux phases, que le relais au moins au nombre de un décide indépendamment des informations concernant d'autres composants du réseau si un signal, reçu par la source ou par au moins un autre relais est décodé puis transféré, **caractérisé en ce qu'**on utilise pour la décision concernant le décodage et le transfert, des codes de détection d'erreurs dans le signal envoyé.

**2.** Procédé selon la revendication 1, **caractérisé en ce que** les performances liées à l'envoi, qui sont associées aux phases de transmission, sont utilisées comme des paramètres servant à optimiser la transmission.

**3.** Procédé selon la revendication 1, **caractérisé en ce qu'**on utilise comme codes de détection d'erreurs des codes de contrôle de redondance cyclique ou des codes LDPC (Low density Parity Check codes, codes à faible densité).

**4.** Procédé selon l'une quelconque des revendications 1 à 3, **caractérisé en ce que** le relais ne transfère pas le signal à la destination en cas de reconnaissance d'une erreur de décodage au moyen de codes de détection d'erreurs.

**5.** Procédé selon l'une quelconque des revendications 1 à 4, **caractérisé en ce que** la source communique un signal uniquement une seule fois au ou aux relais et à la destination.

**6.** Procédé selon l'une quelconque des revendications 1 à 5, **caractérisé en ce que** ce procédé est configuré pour minimiser le taux d'erreurs résultant.

**7.** Procédé selon la revendication 6, **caractérisé en ce qu'**on utilise la connaissance des pertes d'atténuation entre la source, le relais et la destination pour optimiser la transmission.

**8.** Système de transmission de signaux dans un réseau à relais coopératif sans fil, qui comporte au moins une source, une destination et au moins un relais de décodage et de transfert intercalé entre ces dernières, **caractérisé en ce que** le relais comporte une unité de décision concernant le décodage et le transfert d'un signal, et **en ce que** l'unité de décision comporte une unité servant à détecter des erreurs au moyen d'un code de détection d'erreurs.

**9.** Système selon la revendication 8, **caractérisé en ce que** la destination comporte une unité de combinaison servant à combiner des signaux.

**10.** Système selon la revendication 8 ou 9, **caractérisé en ce que** la destination comporte une unité de mémorisation, dans laquelle sont mémorisés des signaux.

**11.** Système selon la revendication 10, **caractérisé en ce que** la destination comporte une unité de démodulation, laquelle peut avoir accès aux signaux mémorisés.

**12.** Système selon l'une quelconque des revendications 8 à 11, **caractérisé en ce que** le relais constitue un équipement terminal mobile.

**13.** Système selon l'une quelconque des revendications 8 à 11, **caractérisé en ce que** ledit système est configuré pour mettre en ouvre le procédé selon l'une quelconque des revendications 1 à 7.

(a) symmetrisches Netzwerk      (b) asymmetrisches Netzwerk

## FIGUR 1

**Optimaler Dekodier-Schwellwert** $SNR_{dec}^{(opt)}$ **[dB]**

FIGUR 2

**FIGUR 3**

FIGUR 4

**EP 1 665 615 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. N. LANEMAN ; D. N. C. TSE ; G. W. WORNELL.** Cooperative Diversity in Wireless Networks: Efficient Protocols and Outage Behavior. *IEEE Trans. Inform. Theory,* Januar 2002
- **M. DOHLER ; A. GKELIAS ; H. AGHVAMI.** 2-Hop Distributed MIMO Communication System. *IEEE Electronics Letters,* Juni 2003
- **E. ZIMMERMANN ; P. HERHOLD ; G. FETTWEIS.** On the Performance of Cooperative Diversity Protocols in Practical Wireless Systems. *Proc. 58th Vehic. Techn. Conf.,* Oktober 2003

- A Simple Transmit Diversity Technique for Wireless Communications. **S.M. ALAMOUTI.** IEEE J. Select. Areas Comm. Oktober 1998, 1451-1458
- **JOHN G. PROAKIS.** Digital Communications. Mc-Graw-Hill International Editions, 2002
- **I.S. GRADSHTEYN ; I.M. RYZHIK.** Table of Integrals, Series, and Products. Academic Press, 1994, 23